(19) Europäisches Patentamt
European Patent Office
Office européen des brevets

(11) Veröffentlichungsnummer: **0 249 177**
**A1**

# (12) EUROPÄISCHE PATENTANMELDUNG

(21) Anmeldenummer: **87108235.0**

(51) Int. Cl.⁴: **H01M 10/36**

(22) Anmeldetag: **06.06.87**

(30) Priorität: **11.06.86 DE 3619657**

(43) Veröffentlichungstag der Anmeldung: **16.12.87 Patentblatt 87/51**

(84) Benannte Vertragsstaaten: **BE DE FR GB NL**

(71) Anmelder: **BASF Aktiengesellschaft**
**Carl-Bosch-Strasse 38**
**D-6700 Ludwigshafen(DE)**

(72) Erfinder: **Naegele, Dieter, Dr.**
**Gudastrasse 2**
**D-6520 Worms 1(DE)**
Erfinder: **Moehwald, Helmut, Dr.**
**Sandwingert 53**
**D-6900 Heidelberg(DE)**
Erfinder: **Naarmann, Herbert, Dr.**
**Haardtblick 15**
**D-6719 Wattenheim(DE)**

## (54) Separatorfreie elektrochemische Zelle.

(57) Elektrochemische Sekundärzelle mit einer Kathode und einer Anode, wobei

a) Kathode und Anode in direktem physikalischen Kontakt miteinander stehen,

b) die Anode als aktives Elektrodenmaterial ein Alkalimetall oder eine Legierung eines Alkalimetalls und

c) die Kathode als aktives Elektrodenmaterial ein elektrisch leitfähiges Polymeres enthält.

EP 0 249 177 A1

# Separatorfreie elektrochemische Zelle

Die Erfindung betrifft elektrochemische Sekundärzellen mit einer Kathode und einer Anode, die dadurch gekennzeichnet sind, daß

a) Kathode und Anode in direktem physikalischen Kontakt miteinander stehen,

b) die Anode als aktives Elektrodenmaterial ein Alkalimetall oder eine Legierung eines Alkalimetalls und

c) die Kathode als aktives Elektrodenmaterial ein elektrisch leitfähiges Polymeres enthält.

In der EP-A 36 118 werden Verfahren zur Herstellung elektrisch leitfähiger Polymerer und deren Anwendung in elektrochemischen Zellen beschrieben. Diese Zellen sind vom Aufbau her mit herkömmlichen Batterien vergleichbar, d.h. zwischen Kathoden-und Anodenraum ist ein Separator vorgesehen, der einen Ausfall der Zelle durch Kurzschluß, der bei direktem Kontakt der Elektroden auftreten würde, verhindert.

In Zellen, bei deren Konstruktion Gewicht und Platzbedarf keine so entscheidende Rolle spielen, wird als Separator häufig ein ionenleitender Elektrolyt, gegebenenfalls zusammen mit einer Membran eingesetzt.

Die Übertragung dieses Prinzips auf kleine, leistungsstarke Zellen, die mit fortschreitender Miniaturisierung elektronischer Bauteile immer größere Bedeutung erlangen, bringt jedoch einige Probleme mit sich.

Zum einen erfordert der Einsatz eines Separators einen entsprechenden Raum in der Zelle, so daß die Zelle insgesamt größer gebaut werden muß.

Zum anderen ist für derartige Zellen eine relativ große Elektrolytmenge erforderlich, die zu einer Verschlechterung des Leistungsgewichts der Zelle führt.

Schließlich muß bei der Herstellung solcher Zellen, insbesondere von Wickelzellen (z.B. "Mignon"-oder "Baby"-Zellen) sorgfältig darauf geachtet werden, daß der Separator nicht beschädigt wird, um einen Kurzschluß zu vermeiden.

Aufgabe der vorliegenden Erfindung war es daher, elektrochemische, insbesondere wiederaufladbare elektrochemische Zellen zur Verfügung zu stellen, die bei vergleichbarer Leistungsfähigkeit gegenüber bekannten Zellen die vorstehend geschilderten Nachteile nicht aufweisen.

Diese Aufgabe wird erfindungsgemäß durch die eingangs definierten elektrochemischen Sekundärzellen gelöst.

Bevorzugte Ausführungsformen erfindungsgemäßer elektrochemischer Sekundärzellen sind den Unteransprüchen zu entnehmen.

In den erfindungsgemäßen Sekundärzellen stehen beide Elektroden in direktem physikalischen Kontakt, d.h. es ist kein Separator vorhanden. Da beide Elektroden elektronisch leitende Materialien als aktiven Bestandteil enthalten, war zu erwarten, daß bei direktem physikalischen Kontakt ein Kurzschluß oder zumindest eine sehr hohe Selbstentladung auftreten sollte.

Dies ist jedoch in den vorliegenden erfindungsgemäßen Zellen nicht der Fall; vielmehr lassen sich diese reversibel be-und entladen, d.h. wie herkömmliche elektrochemische Sekundärzellen zyklisieren.

Als aktives Elektrodenmaterial einer der beiden Elektroden (der Anode) enthalten die erfindungsgemäßen Zellen ein Alkalimetall, d.h. Lithium, Natrium, Kalium, Rubidium oder Caesium. Aus wirtschaftlichen Gründen und wegen der bereits vorhandenen Erfahrung mit diesem Metall als Elektrodenmaterial wird Lithium besonders bevorzugt. Es eignen sich sowohl Elektroden aus reinem Lithium als auch solche aus Legierungen, wie sie zur Verbesserung der Zyklisierbarkeit von Li in elektrochemischen Zellen entwickelt wurden. Stellvertretend seien hier nur Graphit-Intercalationsverbindungen und Li-Al-oder Li-In-Legierungen erwähnt. Verfahren zur Herstellung solcher Materialien sind an sich bekannt und in der Literatur beschrieben, so daß sich hier nähere Angaben erübrigen.

An der Elektrode, die als aktives Material ein Alkalimetall enthält, findet beim Ladevorgang eine Reduktion statt, d.h. diese Elektrode wäre als Kathode (beim Beladen der Zelle) zu bezeichnen. Bei der Entladung der Zelle findet an dieser Elektrode eine Elektronenabgabe, d.h. eine Oxidation statt und diese Elektrode wäre entsprechend als Anode zu bezeichnen.

Um Begriffsverwirrungen zu vermeiden, werden im folgenden die Begriffe Kathode und Anode stets so zugeordnet, wie sie beim Entladen der Zelle zu bezeichnen wären.

Die zweite Elektrode in den elektrochemischen Zellen enthält als aktives Elektrodenmaterial ein elektrisch leitfähiges Polymer.

Hierbei eignen sich prinzipiell alle elektrochemisch reversibel oxidierbaren Polymeren. Solche Polymeren und Verfahren zu deren Herstellung sind an sich bekannt und in der Literatur beschrieben.

Ganz allgemein werden Polymere aus der Gruppe der 5-oder 6-gliedrigen Heterocyclen mit Stickstoff, Sauerstoff oder Schwefel als Heteroatomen und einem konjugierten $\pi$-Elektronensystem oder Anilinpolymere bevorzugt.

Nur stellvertretend seien hier z.B. Thiophen-, Pyrrol-und Anilinpolymere genannt, wobei die beiden letztgenannten Polymerarten besonders bevorzugt werden.

Zu den Polymeren des Pyrrols zählen z.B. ganz allgemein Homo-und Copolymere von Pyrrol und substituierten Pyrrolen sowie Copolymere dieser Monomere mit anderen Comonomeren. Nur beispielhaft seien als Monomere Pyrrol und an den C-Atomen halogen-oder alkylsubstituierte Pyrrole sowie als Comonomere Cyclopentadien, Acetylen, Imidazol, Thiazol, Furan, Thiophen und Pyrazin genannt, wie sie z.B. in der EP-A 36 118 beschrieben werden. Vorzugsweise enthalten derartige Pyrrolpolymere 50 bis 99 Gew.% Pyrrol und 1 bis 50 Gew.% substituierte Pyrrole und/oder andere Comonomere.

Die zweite Gruppe von Polymeren, die als aktives Material für die Kathode bevorzugt wird, sind Polymere des Anilins, d.h. Homopolymere von Anilin oder substituierten Anilinderivaten oder Copolymere dieser Monomere mit anderen Monomeren. Derartige Polymere, ihre Eigenschaften und Verfahren zur Herstellung sind an sich bekannt. Nähere Einzelheiten sind z.B. E.M. Genies et al, Mol. Cryst. Liq. Cryst. (1985), Vol. 121, Seiten 181-186 und A.G. McDiarmid et al, l.c., Vol. 121, Seiten 173-180 zu entnehmen.

Weiterhin sind auch noch Polyacetylene als geeignete elektrisch leitfähige Polymere zu nennen.

Die elektrochemisch reversibel oxidierbaren Polymeren können in dotierter oder undotierter Form, d.h. mit oder ohne eingelagertem Gegenion beim Aufbau der Zelle eingesetzt werden. Im letzteren Fall erfolgt die Einlagerung des Gegenions beim ersten Aufladevorgang.

Als besonders vorteilhafte Kathodenmaterialien können Polypyrrolfilme eingesetzt werden, wie sie z.B. nach dem Verfahren der EP-A 99 055 erhältlich sind.

Bedingt durch ihre Herstellung enthalten derartige Polypyrrolfilme einen gewissen Prozentsatz ihres Gewichts des bei der Herstellung verwendeten Lösungsmittels und Dotierungsmittels sowie ggf. Leitsalze. Dieser "Feuchtigkeitsgehalt" der Filme reicht als Elektrolytmenge in den erfindungsgemäßen Sekundärzellen aus, d.h. die Zugabe eines Elektrolyten ist an sich nicht erforderlich.

Beim Einsatz von elektrisch leitfähigen Polymeren, die herstellungsbedingt keinen als Elektrolyt verwendbaren Elektrolytgehalt aufweisen, reicht es in der Regel aus, durch Zugabe von Elektrolyt einen Elektrolytgehalt in den Polymeren im Bereich von 1 bis 90, vorzugsweise von 20 bis 50 Gew.% einzustellen.

Der Elektrolyt unterliegt an sich keiner besonderen Beschränkung; es werden jedoch Lösungen oder Suspensionen von ionischen oder ionisierbaren Verbindungen als Leitsalz in einem gegenüber den Elektrodenmaterialien indifferenten Lösungsmittel bevorzugt. Als Leitsalze sind beispielsweise Alkalimetall-, Erdalkalimetall-, Ammonium-oder Phosphoniumsalze der Perchlorsäure, Hexafluoroarsensäure, Hexafluoroantimonsäure, Hexafluorophosphorsäure, Benzolsulfonsäure, Trifluormethansulfonsäure oder Toluolsulfonsäure zu nennen. Besonders bevorzugt wird $LiClO_4$ als Leitsalz eingesetzt. Weitere Beispiele für geeignete Leitsalze sind z.B. der DE-A-34 28 843, dort insbesondere der Seite 8, zu entnehmen.

Es ist auch möglich und häufig vorteilhaft, Mischungen mehrerer Leitsalze zu verwenden.

Eine weitere Klasse von als Leitsalze geeigneten Verbindungen wird durch die allgemeine Formel

$[XAX]^+Y^-$

charakterisiert, wobei

X eine monomere organische, mindestens ein Heteroatom enthaltende C-H acide Verbindung oder ein durch oxidative dehydrierende Dimerisierung erhaltenes Dimeres hiervon,

A ein Wasserstoff-, Alkalimetall-oder Ammoniumkation, und

Y ein geeignetes Anion, vorzugsweise aus der Gruppe $I_3^-$, $Br^-$, $ClO_4^-$, $NO_3^-$ oder $PF_6^-$
darstellen.

Bei diesen Elektrolytsalzen handelt es sich im Gegensatz zu den üblichen Lösungen von Salzen des Typs $A^+Y^-$ in Lösungsmitteln des Typs X um feste leitfähige Substanzen.

Als Beispiele für X seien hier nur stellvertretend lineare oder cyclische Säureamide, Amine, Ester, Ketone oder Nitrile genannt. Nähere Einzelheiten hierzu und Verfahren zur Herstellung derartiger Elektrolytsalze sind in der DE-A 33 28 636 beschrieben.

Als Beispiele seien hier

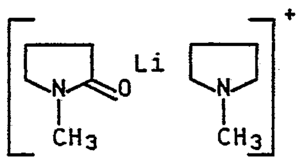 $ClO_4^-$ und 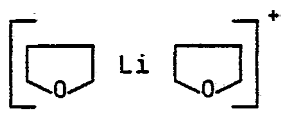 $ClO_4^-$

genannt.

Als Elektrolytlösungsmittel werden vorzugsweise gegenüber den Elektrodenmaterialien inerte Lösungsmittel eingesetzt. Als vorteilhaft haben sich hier z.B. Dimethoxiethan, Diethylenglykoldimethylether, Tetrahydrofuran und dessen Derivate, Propylencarbonat, $\gamma$-Butyrolacton und dessen Derivate, N-Methylpyrrolidon, Acetonitril, Dimethylformamid, Dimethylsulfoxid, Sulfolan und dessen Derivate, Ethylensulfit und Dimethylsulfit herausgestellt, wie sie z.B. in der EP-A 36 118 beschrieben sind. Propylencarbonat ist ein besonders bevorzugtes Elektrolytlösungsmittel.

Eine weitere Gruppe geeigneter Elektrolytlösungsmittel sind unvernetzte Dimere oder Oligomere heterocyclischer Verbindungen wie Tetrahydrofuran, Dioxolan, Dioxan, Pyrrolidin, Pyrrolidon, Tetrahydropyran, Morpholin, Piperidin, Piperazin, Indol, Imidazol und Thiophen, wie sie in der DE-A 34 28 848 näher beschrieben sind.

Selbstverständlich sind auch Mischungen der vorgenannten Elektrolytlösungsmittel verwendbar, häufig bringt die Verwendung solcher Mischungen auch Vorteile mit sich.

Wie bereits erwähnt, sollte das verwendete Elektrolytlösungsmittel gegenüber den verwendeten Elektrodenmaterialien indifferent und im Spannungsbereich, in dem die Zelle bzw. Batterie betrieben wird, gegen elektrochemische Zersetzung stabil sein. Falls eine Zersetzung des Lösungsmittels auftritt, so wird zum einen die Lebensdauer der Zelle durch Lösungsmittelverbrauch herabgesetzt und zum anderen sind Nebenreaktionen der Zersetzungsprodukte des Lösungsmittels mit den Elektrodenmaterialien möglich, die ebenfalls zum Versagen der Zelle führen können.

Die Konzentration der Leitsalze in den Elektrolytlösungsmitteln ist an sich nicht kritisch, vorzugsweise liegt sie jedoch im Bereich von 0,01 bis 2 mol Leitsalz pro Liter Elektrolytlösungsmittel.

In einigen Fällen hat es sich als vorteilhaft herausgestellt, die elektrisch leitfähigen Polymeren, die als Kathodenmaterialien eingesetzt werden, einer Vorbehandlung zu unterziehen. Diese kann ganz allgemein durch Reaktion mit einem Oxidations-oder Reduktionsmittel oder durch eine Vorzyklisierung erfolgen. Vermutlich bildet sich aufgrund dieser Behandlung eine Art Isolationsschicht auf der Oberfläche des Polymeren aus, welche die Stabilität des Gesamtsystems im Hinblick auf Zyklisierbarkeit verbessert.

Bei der Verwendung von filmförmigem Polypyrrol kann eine solche Vorbehandlung z.B. in einer Bedampfung mit Iod oder in einer Vorzyklisierung, d.h. einer ein-oder mehrmaligen Be-und Entladung in einer Halbzelle bestehen. Durch diese Vorbehandlung wird die Reversibilität und Kapazität des Be-und Entladevorgangs beim späteren Betrieb der Zelle verbessert.

Das Leistungsvermögen der erfindungsgemäßen elektrochemischen Sekundärzellen hängt auch von der Kapazität und Stabilität des Elektrodenmaterials sowie von der Güte der sich entweder durch die Vorbehandlung oder im Verlauf der ersten Zyklen bildenden, bereits erwähnten Isolationsschicht in Bezug auf elektrischen Widerstand und Ionendurchlässigkeit.

Gemäß einer bevorzugten Ausführungsform der erfindungsgemäßen Zellen können vorteilhaft Kathoden mit einem zwei-oder mehrschichtigen Aufbau aus unterschiedlichen elektrisch leitfähigen Polymeren der hierin beschriebenen Art eingesetzt werden. Beispielsweise kann ein elektrisch leitfähiges Polymer mit besonders hoher Kapazität und Stabilität (z. B. Polypyrrol oder Polyanilin) mit einem elektrisch leitfähigen Polymer, welches schnell eine Isolationsschicht ausbildet, zu einem Sandwich-artigen Aufbau aus zwei oder mehr Lagen zusammengebaut werden, wobei das letztgenannte Polymer mit der Anode direkt kontaktiert wird. Ein geeignetes Polymer, welches schnell eine Schicht mit hohem elektrischen Widerstand ausbildet, ist z.B. Polyacetylen.

Der Zusammenbau der erfindungsgemäßen elektrochemischen Sekundärzellen kann einfach durch Aufeinanderlegen oder Inberührungbringen von Kathode und Anode, ggf. Anbringung geeigneter Ableiter und Verschließen der derart erhaltenen Zelle gegen Feuchtigkeit erfolgen. Eine besondere Technologie oder spezielle Vorrichtungen sind nicht erforderlich.

Die in den erfindungsgemäßen Zellen umsetzbare Ladung pro Zyklus liegt im allgemeinen im Bereich von 10 bis 80, insbesondere 20 bis 60 Ah/kg, bezogen auf das Gewicht des eingesetzten Polymeren.

Es lassen sich 100 und mehr Zyklen durchführen, ohne daß ein Leistungsabfall auftritt. Begrenzender Faktor für die Zyklenzahl ist in der Regel die Alkalimetall-, (insbesondere Li) Elektrode, da Auflösung und Abscheidung von Li beim Betrieb der Zelle nicht vollständig reversibel sind. Durch Einbau einer neuen Li-Elektrode lassen sich ausgefallene Zellen wieder regenerieren, ohne daß die Kathode davon beeinträchtigt wurde. Die als Kathodenmaterialien verwendeten elektrisch leitfähigen Polymeren lassen sich mehrere hundert mal zyklisieren, ohne daß eine signifikante Materialermüdung feststellbar ist.

Die erfindungsgemäßen Zellen ohne Separator zeichnen sich durch einfache, platzsparende Bauweise bei vergleichbarer Leistung wie Zellen mit Separator aus.

Schließlich ist ein besonderer Vorteil der erfindungsgemäßen Zellen darin zu sehen, daß sie kurzschlußsicher sind, d.h. nicht wie in herkömmlichen Zellen bei Verletzung des dort eingesetzten Separators ein Kurzschluß zu befürchten ist.

Beispiel 1

Ein $ClO^-_4$-Ionen enthaltender Polypyrrolfilm mit einer Dicke von 55 µm und einem Durchmesser von 35 mm, welcher nach dem Verfahren der EP-A 99 055 in Propylencarbonat hergestellt wurde, (herstellungsbedingter Gehalt an Propylencarbonat des Films: 40 Gew.%) wurde direkt auf eine Li-Folie mit einer Dicke von 200 µm gelegt, die derart erhaltene Zelle mit Ableitern versehen, verschlossen und galvanostatisch bei einer Stromdichte von 0,1 mA/cm$^2$ zyklisiert. Die zyklisierbare Ladung zwischen 2,0 und 3,5 V betrug 27 Ah/kg, bezogen auf das eingesetzte Polypyrrol.

Beispiel 2

Auf einen $ClO^{\circ}_4$-Ionen enthaltenden Polypyrrolfilm mit einer Dicke von 70 µm und einem Durchmesser von 35 mm (hergestellt wie in Beispiel 1) wurde eine 5 µm dicke Polyacetylenfolie (hergestellt nach dem in der DE-A 31 30 441 beschriebenen Verfahren), welche mit einer 0,5 M $LiClO_4$-Lösung in Propylencarbonat getränkt worden war, aufgelegt. Unmittelbar auf diese Polyacetylenfolie wurde eine Li-Folie mit einer Dicke von 200 µm aufgelegt. Die derart erhaltene Zelle wurde mit Ableitern versehen, luftdicht verschlossen und galvanostatisch mit einer Stromdichte von 0,3 mA/cm$^2$ zyklisiert. Die zyklisierbare Ladung im Spannungsbereich zwischen 2,0 und 4,0 Volt betrug 47 Ah/kg, bezogen auf das eingesetzte Polypyrrol.

## Ansprüche

1. Elektrochemische Sekundärzelle mit einer Kathode und einer Anode, dadurch gekennzeichnet , daß
   a) Kathode und Anode in direktem physikalischen Kontakt miteinander stehen,
   b) die Anode als aktives Elektrodenmaterial ein Alkalimetall oder eine Legierung eines Alkalimetalls und
   c) die Kathode als aktives Elektrodenmaterial ein elektrisch leitfähiges Polymeres

   Lenthält.

2. Elektrochemische Sekundärzelle nach Anspruch 1, dadurch gekennzeichnet, daß das Alkalimetall Lithium ist.

3. Elektrochemische Zelle nach den Ansprüchen 1 und 2, dadurch gekennzeichnet, daß das elektrisch leitfähige Polymere ein Polymeres aus der Gruppe der 5-und 6-gliedrigen Heterocyclen mit Stickstoff, Sauerstoff oder Schwefel als Heteroatomen und einem konjugierten $\pi$-Elektronensystem oder Polyanilin ist.

4. Elektrochemische Zelle nach den Ansprüchen 1 bis 3, dadurch gekennzeichnet, daß das elektrisch leitfähige Polymere Polypyrrol ist.

Europäisches Patentamt

# EUROPÄISCHER RECHERCHENBERICHT

Nummer der Anmeldung

EP 87 10 8235

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | PATENT ABSTRACTS OF JAPAN, Band 9, Nr. 118 (E-316)[1841], 23. Mai 1985; & JP-A-60 90 66 (SHOWA DENKO K.K.) 18-01-1985 * Insgesamt * --- | 1,3 | H 01 M 10/36 |
| A | FR-A-2 390 834 (KOSUGA JIRO) * Seite 2, Zeile 35 - Seite 4, Zeile 38; Ansprüche * --- | 1 | |
| A | PATENT ABSTRACTS OF JAPAN, Band 10, Nr. 192 (E-417)[2248], 5. Juli 1986; & JP-A-61 39 463 (MITSUBISHI GAS CHEM CO. INC.) 25-02-1986 * Insgesamt * --- | 1-4 | |
| A | FR-A-1 441 686 (C.G.E.) * Insgesamt * ----- | 1 | RECHERCHIERTE SACHGEBIETE (Int. Cl.4)<br>H 01 M 10/40<br>H 01 M 10/36<br>H 01 M 10/00 |

Der vorliegende Recherchenbericht wurde für alle Patentansprüche erstellt.

| Recherchenort | Abschlußdatum der Recherche | Prüfer |
|---|---|---|
| DEN HAAG | 24-09-1987 | DE VOS L.A.R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument